# EUROPÄISCHE PATENTANMELDUNG

(11) **EP 2 108 330 A1**
(43) Veröffentlichungstag der Anmeldung: **14.10.2009**
(21) Anmeldenummer: 09005220.0
(22) Anmeldetag: 09.04.2009
(51) Int. Cl.: A61C 8/00

(54) **Temporäres Zahnimplantat**

(30) Priorität: 09.04.2008 DE 202008004960 U
(71) Anmelder: BEGO Implant Systems GmbH & Co. KG, 28359 Bremen (DE)
(72) Erfinder: Ellerhorst, Martin, 28329 Bremen (DE); Meyer, Stephan, 28844 Weye (DE); Saeger, Detlef, 28277 Bremen (DE); Dr. DR. Rottner, Kurt, 85665 Moosach (DE)
(74) Vertreter: Eisenführ, Speiser & Partner

(57) **Zusammenfassung**

Die Erfindung betrifft ein temporäres Zahnimplantat, das ausgebildet ist, um für einen befristeten Zeitraum im Kieferknochen eines Patienten verankert zu werden.Das erfindungsgemäße temporäre Zahnimplantat zeichnet sich aus durch einen sich vom apikalen Ende de erstreckenden Knochenverankerungsabschnitt, der ausgebildet ist, um eine temporäre Verankerung im Knochen auszubilden, einen sich koronal an den Knochenverankerungsabschnitt anschließenden Weichgewebeanschlussabschnitt, der ausgebildet ist, um eine dichte Verbindung zwischen Weichgewebe und Zahnimplantat auszubilden, einen sich koronal an den Weichgewebeanschlussabschnitt anschließenden Instrumentenangriffsabschnitt, der ausgebildet ist, um ein Drehmoment von einem Eindreh-Instrument auf das Zahnimplantat zu übertragen, einen sich koronal an den Instrumentenangriffsabschnitt anschließenden und sich bis zum koronalen Implantatende erstreckenden Anschlussabschnitt, der ausgebildet ist, um eine Verbindung zu einem dem operativen Implantationsschritt dienenden Hilfsmittel oder einem temporären Verbindungselement herzustellen, wobei der Knochenverankerungsabschnitt einen apikalen Bereich aufweist, in dem ein n-gängiges Knochenverankerungsgewinde ausgebildet ist, das zumindest über einen überwiegenden Anteil der Länge des apikalen Bereichs, vorzugsweise über dessen gesamte Länge, einen konstanten Außendurchmesser und einen von apikal nach koronal zunehmenden Kerndurchmesser aufweist, einen koronalen Bereich aufweist, in dem ein Knochenverankerungsgewinde ausgebildet ist, in dem ein X * n-gängiges Gewinde ausgebildet ist, wobei X ein ganzzahliger Faktor größer eins ist.

## Beschreibung

Die Erfindung betrifft ein temporäres Zahnimplantat, das ausgebildet ist, um für einen befristeten Zeitraum im Kieferknochen eines Patienten verankert zu werden.

Temporäre Zahnimplantate dienen verschiedenen Zwecken in der operativen Behandlung von traumatisch oder durch Erkrankungen bedingten Zahndefekten oder -lücken. Ein wichtiges Einsatzgebiet von temporären Zahnimplantaten liegt in der Nutzung solcher Zahnimplantate zur Überbrückung des Zeitraums zwischen einem Zahnverlust oder einer Zahnextraktion bis zu der endgültigen Implantation eines permanenten Zahnimplantats. In diesem Fall kann eine bestehende Zahnlücke durch ein oder mehrere temporäre Zahnimplantate mit darauf aufgesetzten provisorischen Zahnkronen gefüllt werden, um einerseits dem Patienten für die oftmals mehrwöchige Zeit der Anfertigung eines permanenten Implantats und der gegebenenfalls erforderlichen Einheilung permanenter Zahnimplantate oder operativen Behandlung anderer Defekte einerseits einen ästhetischen Zahnzustand und darüber hinaus eine Kaufunktion bereitzustellen.

Weiterhin werden temporäre Zahnimplantate als sogenannte kieferorthopädische Implantate dazu verwendet, Kiefer- oder Zahnfehlstellungen zu korrigieren. In diesem Fall werden die temporären Implantate gesetzt und in einem zeitlichen Abstand von wenigen Wochen mit einem verspannenden und eine Kraft auf den Kiefer oder andere Zähne ausübenden Verbindungselement gekoppelt, gfs. nachgestellt, und verbleiben dann bis zur Explantation nach korrigierter Fehlstellung im Mundraum.

Ein anderer Einsatzzweck von temporären Zahnimplantaten ist die Verwendung als sogenanntes Indeximplantat. Hierbei wird das temporäre Zahnimplantat im Rahmen der operativen Vorbereitung des permanenten Zahnimplantats eingesetzt, um definierte Referenzpunkte im Mundraum des Patienten zu erhalten, wodurch eine sichere Positionierung von Schablonen und dergleichen möglich wird und hierdurch die Form- und Passgenauigkeit des späteren permanenten Implantats erheblich gesteigert werden kann.

An temporäre Zahnimplantate werden bestimmte Anforderungen gestellt, die sich von denjenigen eines permanenten Implantats in signifikanter Weise unterscheiden. So ist es für ein temporäres Zahnimplantat angestrebt, eine unmittelbar nach Implantation bestehende Stabilität, sogenannte Primärstabilität, zu erhalten, damit das temporäre Zahnimplantat für die ihm zugedachten Funktionen unmittelbar postoperativ, zumindest aber mit einem nur in Tagen bemessenen Zeitraum eingesetzt werden kann. Dies ist für permanente Implantate nicht erforderlich, die eine Langzeitstabilität als Sekundärstabilität aus dem Einwachsen und der so erzeugten festen Knochenanbindung erzielen.

Zugleich ist es für temporäre Zahnimplantate erforderlich, einen leichten Explantationsvorgang zu erzielen. Temporäre Zahnimplantate müssen regelmäßig, nachdem sie ihren Einsatzzweck erfüllt haben, wieder aus dem Kieferknochen entfernt werden. Dabei ist es für den Gesamterfolg der operativen Behandlung erforderlich, dass diese Entfernung des temporären Zahnimplantats ohne eine Beschädigung oder gar bewusste operative Eingriffe wie Fensterung oder dergleichen erfolgen kann. Aus diesem Grund können temporäre Zahnimplantate ihre Verankerungsstabilität in der Regel nicht aus einem Einwachsen über die gesamte Länge oder auch nur in lokal definierten Bereichen beziehen, da ein solches Einwachsen unweigerlich zu einer Beschädigung der Knochensubstanz beim Explantationsvorgang führen würde.

Eine weitere wichtige Forderung an temporäre Zahnimplantate ist ihre mechanische Belastbarkeit beim Implantations- und Explantationsvorgang. Temporäre Zahnimplantate werden zwar häufig an gleichen Positionen wie permanente Zahnimplantate eingesetzt, d. h. in Bereichen, in denen zuvor ein biologischer Zahn gesessen hat, und können daher in die Kavität des ursprünglichen Zahnwurzelbereichs eingesetzt werden. In einer Reihe von operativen Situationen müssen temporäre Zahnimplantate jedoch auch an Knochenpositionen implantiert werden, die weniger gut geeignet für die Implantation sind und in solchen Fällen könne hohe Drehmomente und andere Beanspruchungen auf die temporären Zahnimplantate beim Implantations- und Explantationsvorgang einwirken. An temporäre Zahnimplantate wird - um jegliche Beschädigung der Knochensubstanz zu vermeiden - der Anspruch gestellt, dass bei solchen Implantationsorten das temporäre Implantat sich ohne Beschädigung oder gar Bruch implantieren und explantieren lässt.

Aus EP 1 468 658 A1 ist ein provisorisches Interimsimplantat zum Halten eines provisorischen Zahnersatzes bekannt. Das Implantat weist einen in den Knochen einzuschraubenden Knochenverankerungsabschnitt auf, an dem ein Gewinde mit großer Gewindetiefe ausgebildet ist. An diesem Knochenverankerungsabschnitt schließt sich ein von apikal nach koronal konisch zulaufender Abschnitt an, der in einen schmalen, zylindrischen Halsabschnitt mündet und dann in einen von apikal nach koronal konisch sich erweiternden Abschnitt übergeht. Diese Abschnitte sind einteilig ausgebildet und können mittels einer Überwurfmutter mit einem Haltebereich verbunden werden, der das temporäre Implantat mit einer Zahnkrone verbinden kann. Das temporäre Implantat ist mehrteilig aufgebaut und wird durch eine Durchsteckschraube zusammengehalten. Implantate der in EP 1 468 658 A1 gezeigten Art haben sich zwar in der Praxis für bestimmte Einsatzzwecke als geeignet erwiesen. Jedoch ist in einer Reihe von Fällen die primäre Verankerung dieser Implantate nicht zufriedenstellend und in einigen Anwendungen haben sich die Verbindungsstellen der einzelnen Elemente dieser temporären Implantate als nicht ausreichend belastbar für die in der Praxis auftretenden Beanspruchungen erwiesen und zu Beschädigungen mit nachfolgenden Komplikationen geführt.

Es besteht daher ein Bedarf für ein temporäres Zahnimplantat, welches in einer großen Vielfalt von Anwendungszwecken einsetzbar ist und hierbei die an temporäre Zahnimplantate gestellten Forderungen in zufriedenstellender Weise erfüllt.

Diese Aufgabe wird durch ein temporäres Zahnimplantat zur temporären Verankerung oder Indexierung gelöst, umfassend:
- einen sich vom apikalen Ende de erstreckenden Knochenverankerungsabschnitt, der ausgebildet ist, um eine temporäre Verankerung im Knochen auszubilden,
- einen sich koronal an den Knochenverankerungsabschnitt anschließenden Weichgewebeanschlussabschnitt, der ausgebildet ist, um eine dichte Verbindung zwischen Weichgewebe und Zahnimplantat auszubilden,
- einen sich koronal an den Weichgewebeanschlussabschnitt anschließenden Instrumentenangriffsabschnitt, der ausgebildet ist, um ein Drehmoment von einem Eindreh-Instrument auf das Zahnimplantat zu übertragen,
- einen sich koronal an den Instrumentenangriffsabschnitt anschließenden und sich bis zum koronalen Implantatende erstreckenden Anschlussabschnitt, der ausgebildet ist, um eine Verbindung zu einem dem operativen Implantationsschritt dienenden Hilfsmittel oder einem temporären Verbindungselement herzustellen,
   wobei der Knochenverankerungsabschnitt
- einen apikalen Bereich aufweist, in dem ein n-gängiges Knochenverankerungsgewinde ausgebildet ist, das zumindest über einen überwiegenden Anteil der Länge des apikalen Bereichs, vorzugsweise über dessen gesamte Länge, einen konstanten Außendurchmesser und einen von apikal nach koronal zunehmenden Kerndurchmesser aufweist,
- einen koronalen Bereich aufweist, in dem ein Knochenverankerungsgewinde ausgebildet ist, in dem ein X * n-gängiges Gewinde ausgebildet ist, wobei X ein ganzzahliger Faktor größer eins ist.

Das erfindungsgemäße Zahnimplantat weist insgesamt vier funktionelle Abschnitte auf, die in solcher Weise ausgebildet sind, dass durch ihre Kombination in einem Implantat die Anforderungen an ein temporäres Implantat in besonders vorteilhafter Weise erfüllt werden. Der Knochenverankerungsabschnitt ist in zumindest zwei Bereiche aufgeteilt, die als apikaler Bereich und koronaler Bereich bezeichnet sind. Der apikale Bereich, der nach Implantation in der Tiefe des Kieferknochens zu liegen kommt, weist ein Knochenverankerungsgewinde auf seiner Außenfläche auf, das n-gängig ist. Vorzugsweise ist dieses Knochenverankerungsgewinde eingängig. Unter der Gängigkeit eines Gewindes wird im Zusammenhang dieser Beschreibung und der anhängenden Ansprüche die Anzahl der sich im Gewinde befindlichen einzelnen Gewindegänge verstanden. Bei mehrgängigen Gewinden ist typischerweise ein gleichmäßiger Versatz der Gewindeanfänge über den Außenumfang vorhanden, d. h. bei zweigängigen Gewinden starten die beiden Gewindegänge mit einem Versatz von 180°, bei dreigängigen Gewinden mit einem Versatz von 120° und in entsprechender Weise weiter.

Erfindungsgemäß ist vorgesehen, dass das Knochenverankerungsgewinde im apikalen Bereich einen konstanten Außendurchmesser und einen von apikal nach koronal zunehmenden Kerndurchmesser aufweist. Auf diese Weise wird einerseits der drehmomentübertragende Querschnitt von apikal nach koronal vergrößert und hierdurch die Belastbarkeit des Implantats in gleicher Richtung erhöht, was der Drehmomentbeanspruchung beim Implantations- und Explantationsvorgang entspricht. Zudem wird durch diese Geometrie eine Verdrängung und Kompaktierung von Knochengewebe beim Implantationsvorgang erreicht und auf diese Weise ein optimiertes Implantatlager bereitgestellt.

Im koronalen Bereich ist ein mehrgängiges Gewinde vorgesehen, das zumindest zweigängig ist. Durch diese Ausgestaltung kann im koronalen Bereich eine geringere Gewindetiefe bei zugleich erhöhter Anzahl der Gewindegänge realisiert werden, ohne hierbei eine zu dem apikalen Bereich unterschiedliche Gewindesteigung vorsehen zu müssen. Insbesondere kann die Gewindesteigung im apikalen und koronalen Bereich übereinstimmend sein, d. h., die Gewindeteilung im koronalen Bereich ist um den Quotienten X geringer als im apikalen Bereich. Unter Gewindesteigung ist in diesem Zusammenhang der axiale Abstand zwischen zwei Gewindespitzen ein- und desselben Gewindegangs zu verstehen, unter Gewindeteilung ist in diesem Zusammenhang der axiale Abstand zwischen den Spitzen zweier unmittelbar benachbarter Gewindegänge zu verstehen.

Durch die Verdrängung und Kompaktierung der Knochensubstanz beim Eindrehen des Implantats mit dem apikalen Bereich wird eine für das mehrgängige Gewinde im koronalen Bereich ideale Implantatbettausgestaltung erreicht und hierdurch eine hohe Primärstabilität erzielt. Zugleich findet eine Knochenaufbereitung statt, die ein Einwachsen des Implantats in dem Zeitraum der temporären Implantation zuverlässig verhindert und damit trotz hoher Primärstabilität eine beschädigungsfreie Explantation erlaubt.

Die Ausgestaltung der Gewinde im apikalen und koronalen Bereich ermöglicht darüber hinaus eine Erzielung spezifischer, in bestimmten Anwendungen vorteilhafter Effekte. So kann die Gewindesteigung im apikalen und koronalen Bereich auch geringfügig unterschiedlich gewählt werden, um hierdurch etwa eine Verspannung und damit in gewissen Anwendungen eine höhere Primärstabilität zu erzielen.

Gemäß einer bevorzugten Ausführungsform weist das X * n-gängige Gewinde im koronalen Bereich einen von apikal nach koronal zunehmenden Kerndurchmesser auf. Bei dieser Ausgestaltung ist der koronale Bereich in gleicher Weise mit einem sich erweiternden Kerndurchmesser versehen. Vorzugsweise wird dies durch einen sich stetig über den gesamten Knochenverankerungsabschnitt erweiternden Kerndurchmesser erzielt, um hierdurch Querschnittssprünge zu verhindern und eine ideale Knochensubstanzkompaktierung zu erzielen.

Gemäß einer weiteren bevorzugten Ausführungsform ist es vorteilhaft, wenn das X * n-gängige Gewinde im koronalen Bereich einen von apikal nach koronal zunehmenden Außendurchmesser aufweist, vorzugsweise in gleicher Weise zunehmend wir der Kerndurchmesser. Durch die zusätzliche Maßnahme eines sich erweiternden Außendurchmessers kann die Gewindetiefe im koronalen Bereich in axialer Richtung konstant gehalten werden, selbst wenn sich der Kerndurchmesser dort in axialer Richtung erweitert. Auf diese Weise kann im koronalen Bereich eine in axialer Richtung gleichmäßige Aufnahmekapazität in den Gewindegangzwischenräumen für Knochengewebe bereitgestellt werden, was sich vorteilhaft für die Primärstabilität und Implantationskräfte auswirkt.

Noch weiter ist es bevorzugt, dass der Weichgewebeanschlussabschnitt eine konische, von koronal nach apikal zulaufende Außenfläche aufweist. Durch diese Ausgestaltung wird eine besonders günstige und unmittelbar postoperativ erzielte Weichgewebeanbindung an das temporäre Implantat erzielt. Diese Fortbildung beruht auf der Erkenntnis, dass auch temporäre Implantate für ihren Erfolg über den Einsatzzeitraum eine keimdichte Verbindung zum Weichgewebe, also dem Zahnfleisch benötigen, um das Eindringen von Keimen in den tieferen Knochenverankerungsbereich des Implantats zuverlässig zu verhindern. Diese keimdichte Barriere muss vorzugsweise unmittelbar postoperativ ausgebildet sein, um das Infektionsrisiko deutlich zu senken. Dieses Ziel wird durch die erfindungsgemäße Ausgestaltung in besonders erfolgreicher Weise realisiert.

Des Weiteren ist es bevorzugt, wenn der Durchmesser der äußeren umhüllenden Kontur des Implantats vom apikalen Ende nach koronal bis zum koronalen Ende des Instrumentenangriffsabschnitts stetig zunimmt oder gleich bleibt. Unter der umhüllenden Kontur soll in diesem Zusammenhang die Umhüllende verstanden werden, die sich durch die äußeren Gewindespitzen des Gewindes im Knochenverankerungsabschnitt und die Außenflächen in den anderen Abschnitten ergibt. Durch die stetige Zunahme oder zumindest Konstanz des Durchmessers dieser äußeren umhüllenden Kontur weist das erfindungsgemäße Zahnimplantat keinen Rücksprung dieses Durchmessers in axialer Richtung von apikal nach koronal auf, d. h. die im Implantationsschritt eingeführten Implantatabschnitte werden im Durchmesser zunehmend größer oder bleiben zumindest gleich, nehmen aber nicht ab, wodurch ein dauerhaftes Anliegen des umliegenden Gewebes an das Implantat gewährleistet ist und somit sowohl Verankerung als auch Infektionssicherheit erhöht werden kann.

Des Weiteren ist es bevorzugt, wenn das Zahnimplantat über den Knochenverankerungsabschnitt, den Weichgewebeanschlussabschnitt, den Instrumentenangriffsabschnitt und den Anschlussabschnitt einstückig ausgebildet ist. Auf diese Weise können die Belastbarkeit des Zahnimplantats reduzierende Anschlüsse und Verbindungselemente beim erfindungsgemäßen Implantat vermieden werden und zudem hierdurch ausgebildete Spalten, die als Keimnester dienen können, eliminiert werden.

Noch weiter ist es bevorzugt, wenn der Knochenverankerungsabschnitt eine Länge aufweist, die nicht größer ist als das 2 bis 8-fache, vorzugsweise das 4 bis 5fache des Außendurchmessers des Knochenverankerungsabschnitts am koronalen Ende. Diese Ausgestaltung weist eine relativ geringe Länge des Knochenverankerungsabschnitts im Verhältnis zu dessen Außendurchmesser auf. Dies wird durch die Gestaltung des erfindungsgemäßen Implantats ermöglicht, da die vorteilhafte Ausgestaltung des Knochenverankerungsabschnitts eine hohe Primärstabilität in sich erzielt und somit die Verkürzung des Knochenverankerungsabschnitts erlaubt. Eine solche Verkürzung ist grundsätzlich wünschenswert, da hierdurch sowohl die Implantation als auch die Explantation erleichtert wird und zudem die Einsatzbereiche des temporären Zahnimplantats vielfältiger werden, denn ein Durchbrechen des Zahnimplantats an Stellen, in denen der Kieferknochen keine große Höhe aufweist, ist in dem Fall einer solchen Ausgestaltung des Zahnimplantats weniger zu befürchten.

Gemäß einer weiteren bevorzugten Ausführungsform ist vorgesehen, dass der Anschlussabschnitt
- eine Anschlussgeometrie aufweist, die zur rotationsgesicherten Befestigung eines kieferorthopädischen Verbindungsglieds oder Aufbauteils dient, oder
- einen Kugelkopf aufweist, der zur Bereitstellung einer temporären Referenz im Mundraum dient.

Mit dieser Art der Ausgestaltung wird ein Anschlussabschnitt bereitgestellt, der entweder dazu dient, eine provisorische Krone zu tragen, um ästhetischen und funktionellen Ansprüchen gerecht zu werden. Im alternativen Fall wird durch einen Kugelkopf ein definierter Referenzpunkt im Mundraum bereitgestellt, der für die geometrisch definierte Anordnung von Schablonen und dergleichen im Mundraum dienen kann.

Gemäß einer weiteren bevorzugten Ausführungsform wird das Zahnimplantat fortgebildet durch einen im apikalen Endbereich des Zahnimplantats angeordneten Endabschnitt, dessen Kerndurchmesser mit einer stärkeren Neigung sich von koronal nach apikal verjüngt als der Kerndurchmesser des sich daran nach koronal anschließenden apikalen Bereichs. Hierdurch wird der Knochenverankerungsabschnitt mit zwei unterschiedlichen Kerndurchmessersteigungen ausgebildet, wobei der steiler sich verjüngende Abschnitt am apikalen Ende ausgebildet ist. Hierdurch wird die Insertion des Implantats erleichtert, die Führung entlang eines gewünschten Pfades verbessert und hierdurch die Erzielung einer geplanten Insertionslage des Implantats sichergestellt. Der sich stärker verjüngende Abschnitt kann dabei mit einem Gewinde versehen sein oder gewindefrei sein, insbesondere kann das aus dem sich weniger stark verjüngenden apikalen Abschnitt oberhalb des apikalen Endabschnitts verlaufende Gewinde in dem apikalen Endabschnitt mit steilerem Verlauf auslaufen. Insbesondere ist es bevorzugt, wenn der apikale Endabschnitt spitz zuläuft oder mit einer schmalen abgeflachten Spitze mit geringem Durchmesser, insbesondere mit einem Durchmesser, der im Bereich von etwa 10% des Durchmessers des Implantats im Werkzeugangriffsabschnitt ist, ausgebildet ist.

Gemäß einer weiteren bevorzugten Ausführungsform weist der Endabschnitt eine Schneide auf, die durch eine sich über einen begrenzten radialen Bereich erstreckende Ausnehmung gebildet wird und die zur Bohrungs- und Gewindeausbildung ausgestaltet ist. Mit einer solchen Schneide kann das Implantat einerseits in einen vollkommen unpräparierten Knochenabschnitt eingesetzt werden, indem beim Einsetzvorgang sowohl die Bohrung als auch das Gewinde geformt und/oder geschnitten wird. Hierbei ist zu verstehen, dass der Vorgang der Ausbildung der Bohrung und des Gewindes durch einen rein spanenden Vorgang, einen rein formenden, d.h. verdrängenden Vorgang oder eine Mischform hieraus erfolgen kann. In einer anderen Ausgestaltung kann die Schneide solcherart ausgebildet sein, dass sie zur Aufweitung einer bereits vorgebohrten Bohrung und zur Ausbildung eines Gewindes in der so aufgeweiteten Bohrung ausgestaltet ist. In diesem Fall muss der Implantationsvorgang durch das Vorbohren einer Bohrung mit geringerem Durchmesser als dem Kerndurchmesser des Implantats vorbereitet werden.

Ein weiterer Aspekt der Erfindung ist ein Implantatsystem zur Erstellung einer permanenten prothetischen Versorgung in Ersatz eines oder mehrerer Zähne, umfassend:
- zwei temporäre Zahnimplantate nach einem der vorhergehenden Ansprüche mit jeweils einem Anschlussabschnitt, der einen Kugelkopf aufweist, der zur Bereitstellung einer temporären Referenz im Mundraum dient, und
- ein oder mehrere Schablonen, die jeweils zwei Befestigungsbereiche zur Befestigung an einem Kugelkopf aufweisen, und zur operativen Behandlung im Mundraum des Patienten dienen.

Bei dem erfindungsgemäßen Implantatsystem kommen zwei temporäre Zahnimplantate der zuvor beschriebenen Weise zum Einsatz, die dazu dienen, Schablonen im Mundraum des Patienten in geometrisch definierter Weise zu fixieren. Hierbei ist vorgesehen, dass vorzugsweise genau zwei Zahnimplantate eingesetzt werden, wodurch die Passgenauigkeit in zufriedenstellender Weise über die Kugelköpfe sichergestellt werden kann, ohne dass die Anforderungen an die Positioniergenauigkeit der Zahnimplantate und Fertigungsgenauigkeit der Befestigungspunkte an den Schablonen gestellt werden müssten.

Schließlich ist ein weiterer Aspekt der Erfindung ein Verfahren zur Herstellung eines prothetischen Zahnersatzteils, umfassend die Schritte:
- Abnehmen der Geometrie des Zahnersatzteils anhand einer im Mundraum befestigten Schablone,
- Fertigen des Zahnersatzteils anhand von mit der Schablone ermittelten Geometriedaten,
   wobei die Schablone nach Implantieren eines ersten und zweiten Indeximplantats, das nach der vorhergehend beschriebenen Art ausgebildet ist, durch Befestigen der Schablone an dem ersten und zweiten Indeximplantat im Mundraum verankert wird. Das Verfahren vereinfacht durch die erläuterte Vorgehensweise die Herstellung von prothetischen Zahnersatzteilen und kann zugleich deren Form- und Passgenauigkeit erhöhen.

Bevorzugte Ausführungsformen der Erfindung werden anhand der anhängenden Figuren beschrieben. Es zeigen:
- Fig. 1:: eine Seitenansicht einer ersten Ausführungsform des erfindungsgemäßen temporären Zahnimplantats,
- Fig. 2:: eine Draufsicht auf das koronale Ende des Zahnimplantats gemäß Figur 1,
- Fig. 3:: eine längsgeschnittene Seitenansicht des Zahnimplantats gemäß Figur 1,
- Figuren 4-6:: entsprechende Ansichten gemäß den Figuren 1-3 einer zweiten Ausführungsform des erfindungsgemäßen Zahnimplantats,
- Figur 7:: eine Seitenansicht einer dritten Ausführungsform des erfindungsgemäßen Zahnimplantats, und
- Figur 8:: eine entlang der Linie A-A in Figur 7 geschnittene Längsansicht der dritten Ausführungsform.

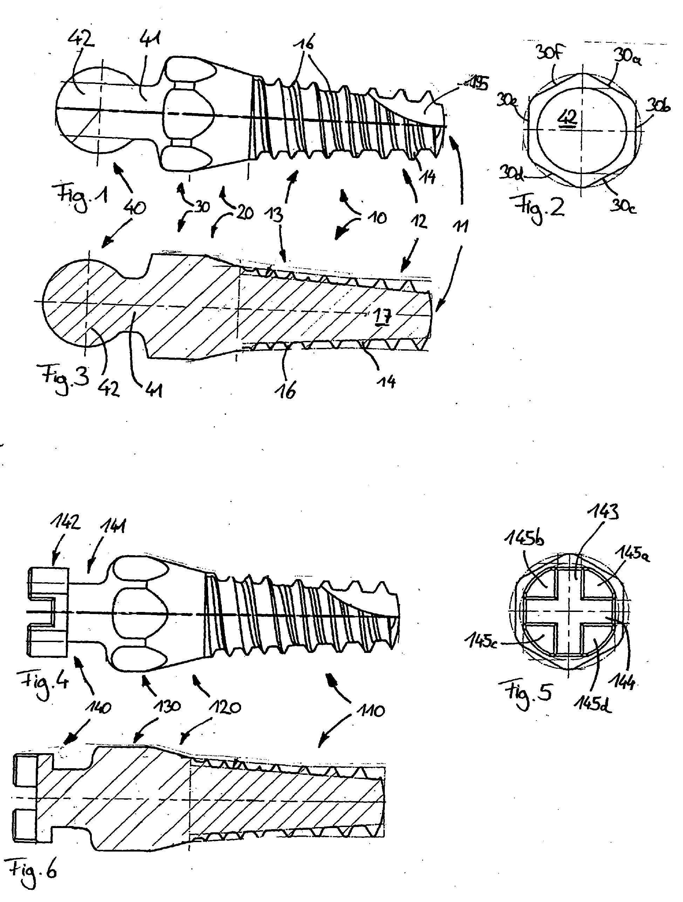

Das in den Figuren 1 bis 3 gezeigte temporäre Zahnimplantat weist einen Knochenverankerungsabschnitt 10 auf, der sich vom apikalen Ende 11 nach koronal erstreckt. Der Knochenverankerungsabschnitt 10 ist in einen apikalen Bereich 12 und einen koronalen Bereich 13 unterteilt.

Der apikale Bereich 12 nimmt etwa 70% der Länge des gesamten Knochenverankerungsabschnitts ein. Auf der Außenfläche des apikalen Bereichs 12 ist ein eingängiges Gewinde angeordnet, welches aus einem Gewindegang 14 besteht, der sich in einer konstanten Steigung von 0,73mm über den apikalen Bereich windet.

Im apikalen Endbereich des Knochenverankerungsabschnitts ist ein sich über etwa 90° erstreckender Umfangskeil 15 ausgenommen, wodurch eine in gewisser Hinsicht selbstbohrende, insbesondere aber selbstgewindeschneidende Eigenschaft des Implantats bereitgestellt wird.

Der Gewindegang 14 läuft über den gesamten Knochenverankerungsabschnitt, also aus dem apikalen Bereich auch in den koronalen Bereich 13. Im koronalen Bereich 13 des Knochenverankerungsabschnitts 10 ist ein zweigängiges Feingewinde ausgebildet, indem ein zweiter Gewindegang 16, der um 180° versetzt zum ersten, aus dem apikalen Bereich hochlaufenden Gewindegang ist, hinzutritt. Die Tiefe des zweiten Gewindegangs 16 nimmt hierbei im Übergangsbereich zwischen apikalem und koronalem Bereich von 0 auf die gewünschte Gewindetiefe zu und bleibt hiernach im weiteren Bereich konstant. Die Steigung ist im apikalen und im koronalen Bereich übereinstimmend und beträgt 0,9mm. Dies entspricht somit einer Teilung von 0,9mm im apikalen Bereich und 0,45mm im koronalen Bereich.

Der Kerndurchmesser des Knochenverankerungsabschnitts 10 nimmt konstant von dem apikalen Ende 11 nach koronal zu und bildet hierdurch einen konischen Kern 17 aus. Im apikalen Bereich 12 liegen alle Gewindespitzen auf dem gleichen Durchmesser, d.h. die Umhüllende definiert eine zylindrische Fläche, wodurch die Gewindetiefe vom apikalen Ende 11 nach koronal abnimmt. Im koronalen Bereich 13 nimmt der Außendurchmesser der Gewindespitzen in gleicher Weise zu wie der Kerndurchmesser, das heisst auch die Umhüllende definiert eine konische Fläche, wodurch die Gewindetiefe im apikalen Bereich 13 konstant bleibt.

An den Knochenverankerungsabschnitt 10 schließt sich koronal ein konisch sich nach koronal erweiternder Zahnfleischanschlussabschnitt 20 an. Der Zahnfleischanschlussabschnitt 20 weist eine glatte, vorzugsweise polierte Oberfläche auf und erweitert sich ausgehend von einem Durchmesser, der dem Durchmesser der Gewindespitzen am koronalen Ende des koronalen Bereichs 13 entspricht, konisch nach koronal auf.

Koronal vom Zahnfleischanschlussabschnitt ist ein kurzer zylindrischer Abschnitt ausgebildet, der als Instrumentenangriffsabschnitt 30 dient. In den Instrumentenangriffsabschnitt 30 sind sechs Flächen 30a-f eingearbeitet, die einen Sechskant ausbilden und sich teilweise in den Zahnfleischanschlussabschnitt erstrecken.

Koronal vom Instrumentenangriffsabschnitt 30 ist ein Anschlussabschnitt 40 ausgebildet, der in diesem Fall aus einem kurzen Halsabschnitt 41 und einem Index-Kugelkopf 42 mit einem Durchmesser von 2,26mm gebildet wird.

Die Figuren 4 bis 6 zeigen eine zweite Ausführungsform des erfindungsgemäßen temporären Zahnimplantats. Die zweite Ausführungsform weist einen Knochenverankerungsabschnitt 110, einen Zahnfleischanschlussabschnitt 120, einen Instrumentenangriffsabschnitt 130 auf, die in gleicher Weise ausgebildet sind wie die entsprechenden Abschnitte 10, 20, 30 der ersten Ausführungsform.

An der zweiten Ausführungsform ist am koronalen Ende ein Anschlussabschnitt 140 ausgebildet, der aus einem kurzen Halsabschnitt 141 und einer Anschlusskrone 142 am koronalen Ende besteht. Die Anschlusskrone 142 ist durch eine zylindrische Scheibe gebildet, die koaxial zum gesamten Zahnimplantat liegt und um 90° versetzt zwei in radialer Richtung verlaufende Nuten 143,144 aufweist, wodurch sich vier keilförmige Höcker 145a-d ausbilden.

Die Höcker 145a-d bzw. die Nuten 143, 144 dienen zur verdrehsicheren Befestigung eines Abutments auf dem abgebildeten temporären Zahnimplantat, um hierdurch die Befestigung einer provisorischen Krone zu ermöglichen.

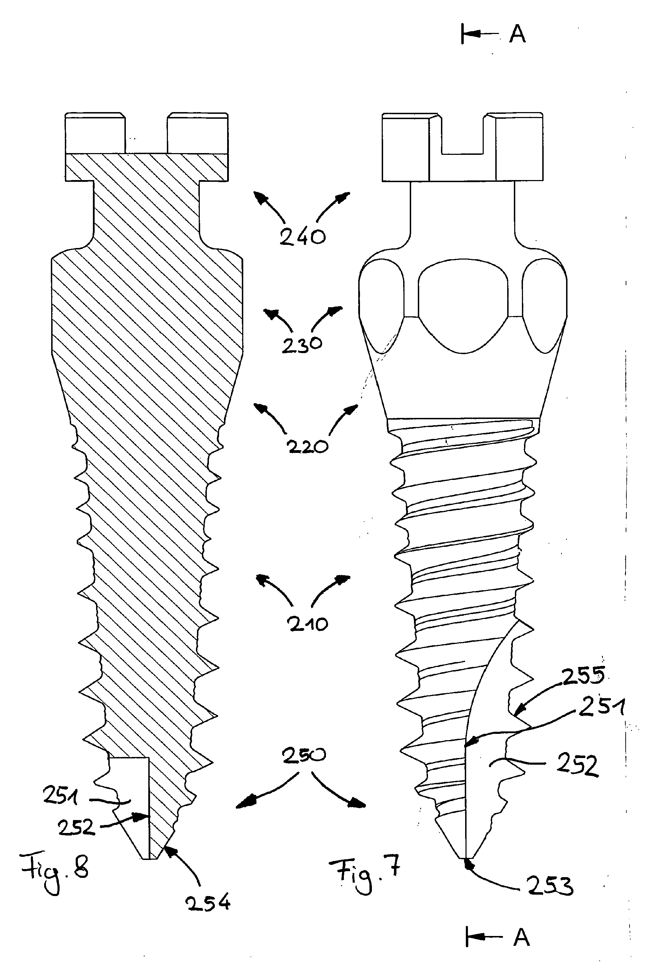

Figuren 7 und 8 zeigen eine dritte Ausführungsform des erfindungsgemäßen temporären Zahnimplantats. Die dritte Ausführungsform weist, in gleicher Weise wie die erste und zweite Ausführungsform, einen Knochenverankerungsabschnitt 210, einen sich daran nach koronal anschließenden Zahnfleischanschlussabschnitt 220, einen sich wiederum daran nach koronal anschließenden Instrumentenangriffsabschnitt 230 und einen sich wiederum hieran nach koronal anschließenden Anschlussabschnitt 240 auf.

Der Knochenverankerungsabschnitt 210 ist beim Zahnimplantat gemäß der dritten Ausführungsform in zwei hinsichtlich ihres Kerndurchmessers unterschiedlich geneigte Abschnitte aufgeteilt, wodurch sich ein zu differenzierender Spitzenabschnitt 250 ergibt. Der Spitzenabschnitt 250 weist eine Außenfläche 254 auf, deren Verjüngung von koronal nach apikal bzw. deren Erweiterung von apikal nach koronal steiler verläuft, d.h. deren Außenfläche in Bezug auf einen Winkel zwischen dieser Außenfläche und der Längsachse des Implantats einen größeren Winkel aufweist als der Winkel zwischen der Außenfläche und der Längsachse im koronal darüber liegenden Bereich des Knochenverankerungsabschnitts 210.

Im Spitzenabschnitt 250 ist eine sich über einen Umfangsabschnitt von 90° erstreckende Ausnehmung ausgebildet. Die Ausnehmung wird durch zwei Flächen 251, 252 begrenzt. Die Fläche 252 liegt in einer Ebene, welche die Längsachse des Zahnimplantats einschließt. Die Fläche 251 steht senkrecht auf der Fläche 252 und verläuft in einem apikalen Bereich der Ausnehmung ebenfalls in der Ebene der Längsachse des Zahnimplantats, nimmt jedoch in einem koronalen Bereich einen gekrümmten Verlauf und läuft zur Außenfläche des Knochenverankerungsabschnitts 210 aus. Die durch die Flächen 251, 252 begrenzte Ausnehmung kann hierdurch in fertigungstechnisch vorteilhafter Weise durch einen Umfangsfräser gefertigt werden.

Am apikalen Ende des Zahnimplantats gemäß Figur 7 und 8 ist eine abgeflachte Spitze mit einer Stirnfläche 253 ausgebildet. Die abgeflachte Stirnfläche 253 weist einen in Bezug auf den Maximaldurchmesser des Implantats und insbesondere in Bezug auf den Durchmesser des Knochenverankerungsabschnitts in einer etwas mittig liegenden Querschnittsebene sehr geringen Durchmesser auf, der etwa ein Fünftel bis ein Zehntel der genannten Durchmesser liegt.

Durch die Flächen 251, 252 wird in dem Bereich, in dem diese Flächen sich mit der Umfangskonturfläche des Zahnimplantats schneiden, eine Schneide gebildet, welche einerseits im Bereich des Spitzenabschnitts 250 zur Lochformung und -bohrung dient und in dem darüber liegenden Bereich aufgrund der ebenfalls als Gewindegeometrie ausgebildeten Schneidkantenform 255 zur Formung und zum Schnitt des Innengewindes in der solcherart ausgebildeten Bohrung dient.

## Patentansprüche

1. Temporäres Zahnimplantat zur temporären Verankerung oder Indexierung, umfassend
einen sich vom apikalen Ende erstreckenden Knochenverankerungsabschnitt, der ausgebildet ist, um eine temporäre Verankerung im Knochen auszubilden,
einen sich koronal an den Knochenverankerungsabschnitt anschließenden Weichgewebeanschlussabschnitt, der ausgebildet ist, um eine dichte Verbindung zwischen Weichgewebe und Zahnimplantat auszubilden,
einen sich koronal an den Weichgewebeanschlussabschnitt anschließenden Instrumentenangriffsabschnitt, der ausgebildet ist, um ein Drehmoment von einem Eindreh-Instrument auf das Zahnimplantat zu übertragen,
einen sich koronal an den Instrumentenangriffsabschnitt anschließenden und sich bis zum koronalen Implantatende erstreckenden Anschlussabschnitt, der ausgebildet ist, um eine Verbindung zu einem dem operativen Implantationsschritt dienenden Hilfsmittel oder einem temporären Verbindungselement herzustellen,
**dadurch gekennzeichnet, dass**
der Knochenverankerungsabschnitt
- einen apikalen Bereich aufweist, in dem ein n-gängiges Knochenverankerungsgewinde ausgebildet ist, das zumindest über einen überwiegenden Anteil der Länge des apikalen Bereichs, vorzugsweise über dessen gesamte Länge, einen konstanten Außendurchmesser und einen von apikal nach koronal zunehmenden Kerndurchmesser aufweist,
- einen koronalen Bereich aufweist, in dem ein Knochenverankerungsgewinde ausgebildet ist, in dem ein X * n-gängiges Gewinde ausgebildet ist, wobei X ein ganzzahliger Faktor größer eins ist.

2. Temporäres Zahnimplantat nach Anspruch 1,
**dadurch gekennzeichnet, dass** das X * n-gängige Gewinde im koronalen Bereich einen von apikal nach koronal zunehmenden Kerndurchmesser aufweist.

3. Temporäres Zahnimplantat nach Anspruch 1 oder 2,
**dadurch gekennzeichnet, dass** das X * n-gängige Gewinde im koronalen Bereich einen von apikal nach koronal zunehmenden Außendurchmesser aufweist, vorzugsweise in gleicher Weise zunehmend wie der Kerndurchmesser.

4. Temporäres Zahnimplantat nach einem der vorhergehenden Ansprüche,
**dadurch gekennzeichnet, dass** der Weichgewebeanschlussabschnitt eine konische, von koronal nach apikal zulaufende Außenfläche aufweist.

5. Temporäres Zahnimplantat nach einem der vorhergehenden Ansprüche,
**dadurch gekennzeichnet, dass** der Durchmesser der äußeren umhüllenden Kontur des Implantats vom apikalen Ende nach koronal bis zum koronalen Ende des Instrumentenangriffsabschnitts stetig zunimmt oder gleich bleibt.

6. Temporäres Zahnimplantat nach einem der vorhergehenden Ansprüche,
**dadurch gekennzeichnet, dass** das Zahnimplantat über den Knochenverankerungsabschnitt, den Weichgewebeanschlussabschnitt, den Instrumentenangriffsabschnitt und den Anschlussabschnitt einstückig ausgebildet ist.

7. Temporäres Zahnimplantat nach einem der vorhergehenden Ansprüche,
**dadurch gekennzeichnet, dass** der Knochenverankerungsabschnitt eine Länge aufweist, die nicht größer ist als das 2 bis 8-fache, vorzugsweise das 4 bis 5fache des Außendurchmessers des Knochenverankerungsabschnitts am koronalen Ende.

8. Temporäres Zahnimplantat nach einem der vorhergehenden Ansprüche,
**dadurch gekennzeichnet, dass** der Anschlussabschnitt
- eine Anschlussgeometrie aufweist, die zur rotationsgesicherten Befestigung eines kieferorthopädischen Verbindungsglieds oder Aufbauteils dient, oder
- einen Kugelkopf aufweist, der zur Bereitstellung einer temporären Referenz im Mundraum dient.

9. Temporäres Zahnimplantat nach einem der vorhergehenden Ansprüche, **gekennzeichnet durch** einen im apikalen Endbereich des Zahnimplantats angeordneten Endabschnitt, dessen Kerndurchmesser mit einer stärkeren Neigung sich von koronal nach apikal verjüngt als der Kerndurchmesser des sich daran nach koronal anschließenden apikalen Bereichs.

10. Temporäres Zahnimplantat nach dem vorherigen Anspruch 9,
**dadurch gekennzeichnet, dass** der Endabschnitt eine Schneide aufweist, die durch eine sich über einen begrenzten radialen Bereich erstreckende Ausnehmung gebildet wird und die zur Bohrungs- und Gewindeausbildung ausgestaltet ist.

11. Implantatsystem zur Erstellung einer permanenten prothetischen Versorgung in Ersatz eines oder mehrerer Zähne, umfassend:
- zwei temporäre Zahnimplantate nach einem der vorhergehenden Ansprüche mit jeweils einem Anschlussabschnitt, der einen Kugelkopf aufweist, der zur Bereitstellung einer temporären Referenz im Mundraum dient, und
- ein oder mehrere Schablonen, die jeweils zwei Befestigungsbereiche zur Befestigung an einem Kugelkopf aufweisen, und zur operativen Behandlung im Mundraum des Patienten dienen.

12. Verfahren zur Herstellung eines prothetischen Zahnersatzteils, umfassend die Schritte:
- Abnehmen der Geometrie des Zahnersatzteils anhand einer im Mundraum befestigten Schablone,
- Fertigen des Zahnersatzteils anhand von mit der Schablone ermittelten Geometriedaten,
**dadurch gekennzeichnet, dass** die Schablone nach Implantieren eines ersten und zweiten Indeximplantats, das nach einem der vorhergehenden Ansprüche 1-8 ausgebildet ist durch Befestigen der Schablone an dem ersten und zweiten Indeximplantat im Mundraum verankert wird.
